# EUROPÄISCHE PATENTSCHRIFT

(11) **EP 0 508 944 B1**
(45) Veröffentlichungstag und Bekanntmachung des Hinweises auf die Patenterteilung: **26.05.1999**
(21) Anmeldenummer: 92810178.1
(22) Anmeldetag: 10.03.1992
(51) Int. Cl.: H04M 1/02

(54) **Handapparat für ein mit einer Telefonkarte betreibbares Auto- oder Funktelefon**
Handset for a card operated car telephone or radiotelephone
Combiné téléphonique pour un radiotéléphone ou téléphone de voiture fonctionnant avec une carte

(30) Priorität: 11.03.1991 CH 721/91
(43) Veröffentlichungstag der Anmeldung: 14.10.1992
(73) Patentinhaber: Peiker, Andreas, 61365 Friedrichsdorf/Ts. (DE)
(72) Erfinder: Peiker, Andreas, 61365 Friedrichsdorf/Ts. (DE)
(74) Vertreter: Roshardt, Werner Alfred, Dipl.-Phys.

(56) Entgegenhaltungen:
- EP-A- 0 319 108
- DE-A- 3 610 202
- DE-U- 8 703 864
- DE-U- 9 109 087

## Beschreibung

### Technisches Gebiet

Die Erfindung betrifft einen Handapparat für ein mit einer Telefonkarte betreibbares Auto- oder Funktelefon gemäss dem Oberbegriff des Patentanspruchs 1 und eine Telefonkarte für den Handapparat.

### Stand der Technik

Ein Handapparat dieser Art ist Gegenstand des CH-Patents 667 171 (Peiker), gemäss dem im Handapparatgehäuse ein Kartenaufnahmeraum für eine Telefonkarte ausgebildet und an diesem eine Lesevorrichtung zum Lesen der Karte angeordnet ist.

Aus EP 319 108 ist ein weiterer Handapparat dieser Art bekannt, der eine Gehäuseoberseite und eine Gehäuseunterseite aufweist, wobei auf der Gehäuseunterseite eine Sprechmuschel und eine Hörmuschel angeordnet sind und im Scheitelbereich der Gehäuseoberseite quer zur Längserstreckung des Handapparats ein Einführungsschlitz für eine Telefonkarte und daran angrenzend im Handapparat eine Kartenlesevorrichtung vorgesehen sind.

### Darstellung der Erfindung

Aufgabe der vorliegenden Erfindung ist es, die den Gegenstand des CH-Patents 667 171 bildende, grundlegende Erfindung insgesamt weiterzubilden und zu verbessern. Insbesondere ist es Ziel der Erfindung, eine besonders bequeme Handhabung von Handapparat und Karte zu ermöglichen, ohne die konstruktive Ausgestaltung namentlich klein und kompakt ausgeführter Handapparate zu erschweren.

Die erfindungsgemässe Lösung der Aufgabe ist Gegenstand des Patentanspruchs 1.

Zweckmässig liegt zumindest der grössere Teil des Kartenaufnahmeraums im die Hör- und Sprechmuschel verbindenden Griffteil und zwar angrenzend an die untere Griffteilwandung. Der Kartenaufnahmeraum erstreckt sich dabei vorzugweise in die Hörmuschel hinein und über nahezu die gesamte Griffteilbreite, so dass die Telefonkarte vollständig oder nahezu vollständig in den Griffteil (und den daran angrenzenden Teil der Hörmuschel) einführbar und das Ergreifen und Halten des Handapparats nicht durch einen vorstehenden Kartenteil behindert ist.

Zum Herausschieben der Telefonkarte aus dem Aufnahmeraum ist vorzugsweise an der Griffteilunterseite eine in den Kartenaufnahmeraum mündende, mindestens fingerbreite Aussparung vorgesehen. Die Aussparung kann als quer zur Grifflängsrichtung verlaufendes, fingerbreites Langloch im Griffunterteil ausgeführt sein. Sie kann sich in den Karteneinführungsschlitz hinein erstrecken, so dass in einem Bewegungsablauf zunächst mit durch die Aussparung greifendem Zeigefinger auf der in der Aussparung zugänglichen Kartenoberfläche angegriffen und die Karte damit soweit aus dem Gehäuse herausgezogen werden kann, dass anschliessend mit dem Daumen auf die andere Kartenoberfläche gefasst und die Karte gänzlich herausgezogen werden kann.

Die Aussparung kann ferner am dem Karteneinführungsschlitz gegenüberliegenden Längsrandbereich der Griffunterseite vorgesehen sein, so dass mit durch die Aussparung greifendem Finger am dem Karteneinführungsschlitz gegenüberliegenden Kartenlängsrand angegriffen und die Karte soweit aus dem Gehäuse herausgestossen werden kann, dass ein zum Ergreifen ausreichender Kartenteil aus dem Karteneinführungsschlitz herausragt.

Der Kartenaufnahmeraum kann auch an beiden Gehäuselängsseiten offen sein, wobei nur ein Einführungsschlitz an einer Längsseite oder zwei Einführungsschlitze an beiden Gehäuselängsseiten vorgesehen sein können. Damit kann die Karte wahlweise an einer Gehäuselängsseite eingeführt und an der anderen herausgeschoben oder (bei zwei Einführungsschlitzen) wahlweise an jeder der beiden Gehäuseseiten eingeführt und herausgeschoben werden.

Die Kartenlesevorrichtung (Kartenleser) kann so ausgebildet und angeordnet sein, dass die Karte sowohl in der Gebrauchslage als auch in der umgedrehten (umgewendeten) Lage lesbar ist. Dazu kann der Kartenleser zum Lesen einer kontaktlosen Telefonchipkarte ausgebildet oder mit zwei oberhalb und unterhalb des Kartenaufnahmeraums angeordneten Leseeinrichtungen ausgerüstet sein. Bei der dafür zu verwendenden Telefonchipkarte ist der Chip im Bereich einer Mittelparallelen der Karte angeordnet.

Gemäss einer besonders bevorzugten Ausführungsform ist im Kartenaufnahmeraum ein Führungsschlitten zur Aufnahme der Telefonkarte vorgesehen, der derart verschiebbar gelagert ist, dass er beim Ueberführen der Telefonchipkarte in die Kontaktposition zumindest streckenweise eine in der Kartenebene gekrümmte Bewegungskurve ausführt, wobei die in die Kontaktlage führende Endbewegung zumindest näherungsweise eine Längsbewegung bezüglich der rechteckigen Kontaktflächen der Telefonkarte ist. Auf diese Weise können auch bei einer Karteneinführung gemäss der Erfindung die Vorteile genutzt werden, die bei der bekannten querseitigen Einführung gegeben sind. Die Anordnung der Kontaktflächen auf der Chipkarte sind nämlich genormt. Es handelt sich um sechs rechteckige Kontaktflächen, die dieselbe Längsrichtung wie die Telefonchipkarte haben und die in zwei Dreiergruppen mit verhältnismässig kleinen Abständen innerhalb der Gruppe angeordnet sind.

Die erfindungsgemässe Bewegungskurve kann z. B. dadurch erzeugt werden, dass der Führungsschlitten in einer geeigneten Kulisse translatorisch bewegbar gelagert ist. Besonders vorteilhaft, weil mechanisch einfach, ist eine Drehung des Führungsschlittens um eine bestimmte Achse.

Die Drehachse ist mit Vorteil so angeordnet, dass - bei im Führungsschlitten eingefügter Telefonchipkarte - der Durchstosspunkt der geometrischen Verlängerung der Drehachse durch die geometrische Ebene der Chipkarte in der Nähe des Randes der Telefonchipkarte liegt. Auf diese Weise wird ein relativ grosser Rotationsradius erzielt, ohne dass die Konstruktion im Handapparat übermässig viel Platz einnimmt.

Besonders vorteilhaft ist es, wenn der genannte Durchstosspunkt in der Nähe einer Ecke der eingeführten Telefonchipkarte liegt.

Vorzugsweise ist der zur Aufnahme der Telefonchipkarte bereite Führungsschlitten so ausgerichtet, dass die Telefonchipkarte zunächst schräg zur Gehäuselängsseite einzuschieben und danach zu drehen ist. Die Chipkarte wird damit durch eine kombinierte translatorische und rotatorische Bewegung in die Kontaktposition gebracht.

Eine technisch besonders saubere Kontaktierung ergibt sich, wenn der Führungsschlitten in den beiden Endpositionen arretierbar ist und ein Kontaktschalter vorgesehen ist, der die Aufhebung der Drehblockierung erst dann einleitet, wenn die Telefonchipkarte vollständig im Führungsschlitten eingeschoben ist. Dadurch lässt sich sicherstellen, dass die Endbewegung der Chipkarte gegenüber der ortsfesten Kontaktanordnung des Handapparats, die möglichst in Längsrichtung der Kontaktflächen verlaufen soll, immer in der gleichen Art und Weise abläuft.

Vorzugsweise ist der Führungsschlitten so geformt, dass er die Telefonchipkarte am Rand möglichst weitgehend umfassen kann ohne in irgendeiner Weise aus dem Einführungsschlitz herauszuragen. Es werden also vorstehende Teile, die leicht beschädigt werden könnten, vermieden. Ein in diesem Sinn geformter Führungsschlitten ist z. B. trapezförmig, wobei die Drehachse in der Nähe der spitzwinkligen Basisecke ist.

Aus den Patentansprüchen und der nachfolgenden Beschreibung ergeben sich weitere vorteilhafte Merkmalskombinationen.

### Kurze Beschreibung der Zeichnungen

Im folgenden wird die Erfindung anhand von Ausführungsbeispielen im Zusammenhang mit den Zeichnungen näher erläutert. Es zeigen:
- Fig. 1: eine Untersicht eines erfindungsgemässen Handapparats,
- Fig. 2: eine Seitenansicht des Handapparats von Fig. 1,
- Fig. 3: eine Draufsicht auf den Handapparat von Fig. 1,
- Fig. 4: eine Untersicht einer Variante des Handapparats,
- Fig. 5: eine Chipkarte für den Handapparat,
- Fig. 6: eine Untersicht eines Handapparats mit schräg einführbarer Telefonchipkarte,
- Fig. 7: eine Draufsicht auf einen Führungsschlitten,
- Fig. 8: eine Darstellung zweier Positionen des beweglich gelagerten Führungsschlittens im Kartenaufnahmeraum, und
- Fig. 9: eine schematische Darstellung einer bevorzugten Bewegungskurve der auf der Chipkarte angeordneten Kontaktflächen.

In den Zeichnungen sind gleiche Teile stets mit gleichen Bezugszeichen versehen.

### Wege zur Ausführung der Erfindung

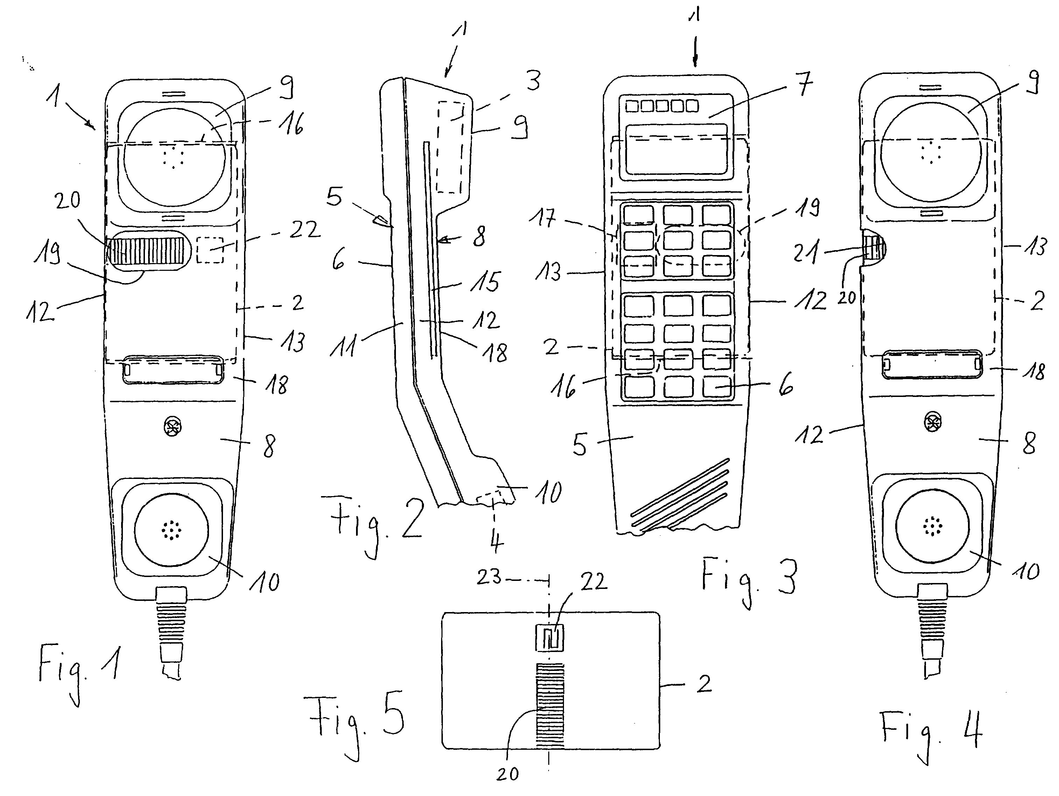

Der in Fig. 1 bis 3 dargestellte Handapparat (Handset) 1 ist für ein mit der in Fig. 5 dargestellten Telefonchipkarte 2 betreibbares Auto- oder Funktelefon bestimmt. Für die Verwendung als Autotelefon ist eine (nicht dargestellte) Auflage vorgesehen, auf welcher der Handapparat 1 verriegelbar ist, wobei die Verriegelung zum Abnehmen des Handapparats 1 mittels einer an der Auflage vorgesehenen Taste ausrückbar ist. Für die Verwendung als Funktelefon kann der Handapparat mit einem Sende- und Empfangsteil und einer Antenne (an der Stirnseite der Hörmuschel) ausgerüstet sein.

An der Gehäuseoberseite 5 ist der Handapparat mit einer Tastatur 6 und einem Anzeigefeld (Display) 7 versehen. An der Gehäuseunterseite 8 liegen die Hörmuschel 9 und die Sprechmuschel 10. (Unter "Muschel" werden die die Hör- bzw. Sprechkapsel 3 bzw. 4 beherbergenden Wandungsteile der Gehäuseunterseite verstanden.) Der die Hör- und Sprechmuschel 9 und 10 verbindende Griffteil des Gehäuses ist mit 11 bezeichnet, die beiden Gehäuselängsseiten mit 12 und 13.

An der Gehäuselängsseite 12 ist ein Einführungsschlitz 15 für die Telefonchipkarte 2 angeordnet. Die Länge des Einführungsschlitzes 15 ist um eine Toleranz grösser als die Länge der Chipkarte 2, so dass diese längsseitig einführbar ist. Der Einführungsschlitz 15 mündet in einen Kartenaufnahmeraum 16 für die Chipkarte 2, der sich bis zur Wandung der dem Einführungsschlitz 15 gegenüberliegenden Gehäuselängsseite 13 erstreckt. Die Breite des Kartenaufnahmeraums 16 entspricht also nahezu der Breite des Handapparats 1 und ist zur vollständigen Aufnahme der Karte 2 bemessen, so dass das Ergreifen und Halten des Handapparats 1 nicht durch einen aus dem Einführungsschlitz 15 herausragenden Kartenteil behindert ist.

In Längsrichtung erstreckt sich der der Kartenlänge angepasste Kartenaufnahmeraum 16 etwa von der Mitte der Hörmuschel 9 bis ungefähr in die Mitte des Griffteils 11. Der grösste Teil des Kartenaufnahmeraums 16 befindet sich mithin im Griffteil 11, ein kleinerer Teil in der Hörmuschel 9, wobei der Aufnahmeraum über der Hörkapsel 3 liegt. Im Griffteil 11 ist der Kartenaufnahmeraum 16 unten durch die Wandung 18 der Gehäuseunterseite 8 begrenzt. Ueber dem Kartenaufnahmeraum 16 ist ein Chipkartenleser 17 zum Lesen der Chipkarte 2 angeordnet.

Zum Herausschieben der vollständig in den Aufnahmeraum 16 eingeführten Chipkarte 2 ist in der Wandung 18 ein fingerbreites Langloch 19 vorgesehen, das quer zur Handapparatlängsrichtung verläuft. Das Langloch 19 ist so lang bemessen, dass die Karte 2 mit durch das Langloch greifendem (Zeige-)Finger in einer Bewegung längs des Langslochs soweit aus dem Einführungsschlitz 15 herausgeschoben werden kann, dass der daraus herausragende Kartenteil bequem gefasst und die Karte 2 ohne weiteres gänzlich herausgezogen werden kann.

Der Chipkartenleser 17 ist in der üblichen Weise mit sog. "sliding" oder "landing" Kontakten ausgebildet und unterhalb der Tastatur 6 im Griffteil 11 angeordnet.

Bei der in Fig. 3 dargestellten Variante ist eine mindestens fingerkappengrosse Randaussparung 21 am an den Karteneinführungsschlitz 15 angrenzenden Längsrandbereich 12 der Gehäuseunterseite 8 vorgesehen. Dies ermöglicht es, in einem Bewegungsablauf zunächst mit durch die Aussparung 21 greifendem Zeigefinger auf der in der Aussparung 21 zugänglichen Kartenoberfläche anzugreifen und die Karte 2 damit soweit aus dem Schlitz 15 herauszuschieben, dass anschliessend mit dem Daumen auf die andere Kartenoberfläche gefasst und die Karte 2 gänzlich herausgezogen werden kann.

Zum gleichen Zweck kann sich bei der Ausführungsform von Fig. 1 und 2 das Langloch 19 auch bis in den Einführungsschlitz 15 hinein erstrecken.

Die Aussparung 21 kann auch am dem Karteneinführungsschlitz 15 gegenüberliegenden Längsrandbereich 13 der Gehäuseunterseite 8 vorgesehen sein, so dass mit durch die Aussparung 21 greifendem Finger am dem Karteneinführungsschlitz 15 gegenüberliegenden Kartenlängsrand angegriffen und die Karte 2 soweit aus dem Schlitz 15 herausgestossen werden kann, dass ein zum Ergreifen ausreichender Kartenteil herausragt.

Zum gleichen Zweck kann sich bei der Ausführungsform von Fig. 1 und 2 das Langloch 19 auch zum dem Karteneinführungsschlitz 15 gegenüberliegenden Längsrandbereich 13 der Gehäuseunterseite 8 hin erstrecken, soweit, dass mit dem Zeigefinger am dort liegenden Kartenrand angegriffen und die Karte um die Länge des Langlochs herausgestossen werden kann.

Der Kartenaufnahmeraum 16 kann ferner auch an der Gehäuselängsseite 13 offen sein, so dass die Karte 2 wahlweise an jeder der beiden Gehäuseseiten 12, 13 herausziehbar ist. Dabei kann an der Längsseite 13 ebenfalls ein Einführungsschlitz 15 gebildet sein, um die Karte auch dort einführen zu können. Damit wird ein Durchschieben der Karte (Einführen und Herausziehen in derselben Richtung) von der einen und der anderen Seite ermöglicht.

Der Chipkartenleser 17 kann so ausgebildet und angeordnet sein, dass die Chipkarte sowohl in der Gebrauchslage als auch in der umgedrehten (umgewendeten) Lage lesbar ist. Dazu kann der Kartenleser 17 in an sich bekannter Weise zum Lesen einer kontaktlosen Telefonchipkarte ausgebildet oder mit zwei oberhalb und unterhalb des Kartenaufnahmeraums 16 angeordneten Leseeinrichtungen ausgerüstet sein. Bei der dafür zu verwendenden Telefonchipkarte ist der Chip 22 im Bereich einer Mittelparallelen 23 der Karte 2 angeordnet, so dass das kontaktlose Lesen durch einen einzigen, über der Mittelparallelen 23 der im Kartenaufnahmeraum 16 befindlichen Karte 2 angeordneten induktiven Lesekopf erfolgen kann.

Die beschriebenen Ausführungsformen des Handapparats und der Karte vereinigen im wesentlichen alle vorteilhaften Merkmale auf sich. Selbstverständlich ist es auch möglich, einzelne Merkmale wegzulassen und nur die im Einzelfall gewünschten Vorteile zu realisieren.

So lässt sich namentlich die erfindungsgemässe Ausnehmung 19, 21 auch unabhängig von der Anordnung des Einführungsschlitzes 15 an der Gehäuselängsseite 12 und der Bemessung des Schlitzes 15 nach der Kartenlänge realisieren. Insbesondere kann die erfindungsgemässe Ausnehmung 19, 21 und die rutschfeste Ausbildung der Kartenoberfläche sowie die Ausbildung des Kartenlesers zum Lesen auch einer umgewendet eingeführten Karte bei stirnseitig (an der Stirnseite der Hörmuschel 9 oder der Sprechmuschel 10) angeordnetem Einführungsschlitz und bei einer Schlitzbemessung nach der Kartenbreite zum schmalseitigen Einführen der Karte vorteilhaft realisiert werden.

Im folgenden werden vorteilhafte Ausführungsformen zur praktischen Realisierung des Längseinschubs in Verbindung mit bekannten normierten Chipkarten beschrieben.

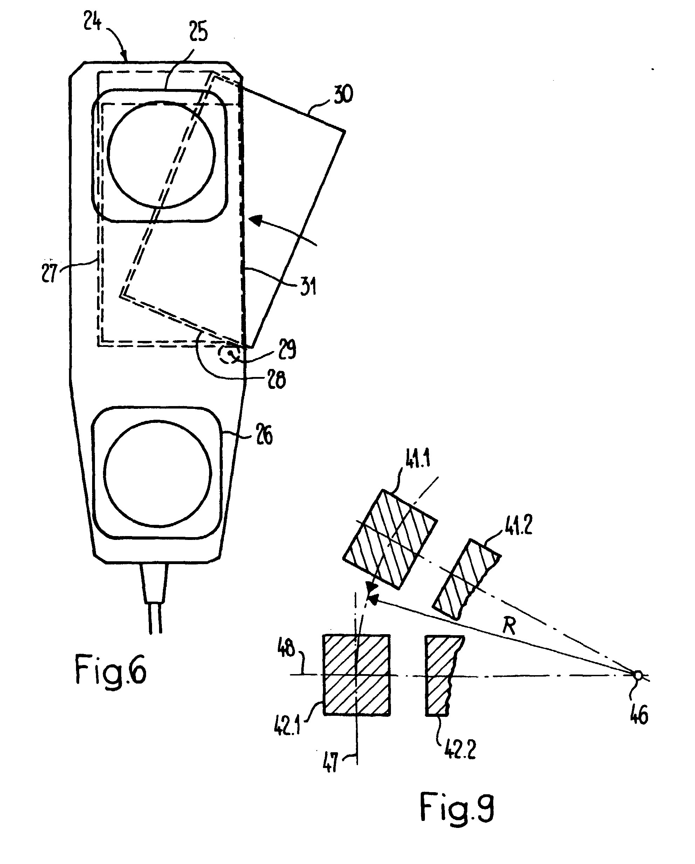

Fig. 6 zeigt einen Handapparat 24, der in seiner äusseren Erscheinungsform z. B. dem in Fig. 1 gezeigten entsprechen kann. Andeutungsweise sind eine Hörmuschel 25 und eine Sprechmuschel 26 eingezeichnet. Ein Kartenaufnahmeraum 27 weist einen Einführungsschlitz 31 auf, der an der Gehäuselängsseite des Handapparats angeordnet ist. Er ist im vorliegenden Fall eindeutig länger als die einzuführende Telefonchipkarte 30. Im Kartenaufnahmeraum 27 ist ein Führungsschlitten 28 drehbar gelagert. Rotationsachse ist gemäss einer besonders bevorzugten Ausführungsform eine Achse 29, die in einem Randbereich der im Führungsschlitten 28 eingeführten Telefonchipkarte 30, insbesondere in der Nähe einer Ecke derselben angeordnet ist. Um diese Achse 29 ist der Führungsschlitten 28 zwischen einer Kartenaufnahmeposition und einer Kontaktposition hin und her bewegbar. Die Kontaktposition ist vorzugsweise dadurch definiert, dass die Telefonchipkarte 30 mit ihrer Längsseite parallel zur Gehäuselängsseite des Handapparats resp. zum Einführungsschlitz 31 liegt. In der Kartenaufnahmeposition ist der Führungsschlitten im vorliegenden Beispiel um etwa 20° im Uhrzeigersinn gedreht. Wie weiter unten noch zu erläutern sein wird, soll der Winkel möglichst klein sein.

Das Einführen der Telefonchipkarte 30 läuft wie folgt ab: Die Chipkarte 30 wird leicht schräg d. h. mit einer Ecke voran in den Einführungsschlitz 31 eingeschoben in Richtung senkrecht zur Kantenlängsseite. Der Führungsschlitten 28 weist geeignete Führungsmittel auf, so dass die Karte in einer Richtung senkrecht zur Längsseite geführt wird. Wenn die Karte vollständig im Führungsschlitten 28 sitzt, befindet sie sich noch nicht vollständig im Kartenaufnahmeraum 27, sondern ragt noch mit einer Ecke aus diesem heraus.

Der Führungsschlitten 28 ist in der Kartenaufnahmeposition blockiert, damit er sich nicht bewegen kann, wenn die Telefonchipkarte 30 in der oben beschriebenen Art eingeschoben wird. Sobald letztere aber korrekt im Führungsschlitten 28 sitzt, wird ein Kontaktschalter aktiviert, der die Deblokkierung der Drehbewegung einleitet. Entweder durch Druck des Benutzers auf die herausragende Kartenecke oder mit Hilfe eines internen Antriebs wird der Führungsschlitten 28 mit der darin einsitzenden Telefonchipkarte 30 um die Achse 29 gedreht. Beim Erreichen der Kontaktposition resp. kurz davor kommt es zum elektrischen Kontakt zwischen den auf der Karte normiert angeordneten Kontaktflächen und den Kontaktelementen des Handapparats. Erst wenn der elektrische Kontakt sichergestellt ist, kann der auf der Chipkarte integrierte Halbleiterspeicher oder Prozessor angesteuert werden. Nach Abschluss der Kommunikation zwischen Handapparat und Chipkarte kann letztere wieder ausgeworfen resp. vom Benutzer herausgezogen werden (vgl. dazu Langloch 19 aus Fig. 1 und Aussparung 21 aus Fig. 4).

Im folgenden soll auf ein paar vorteilhafte konstruktive Einzelheiten eingegangen werden.

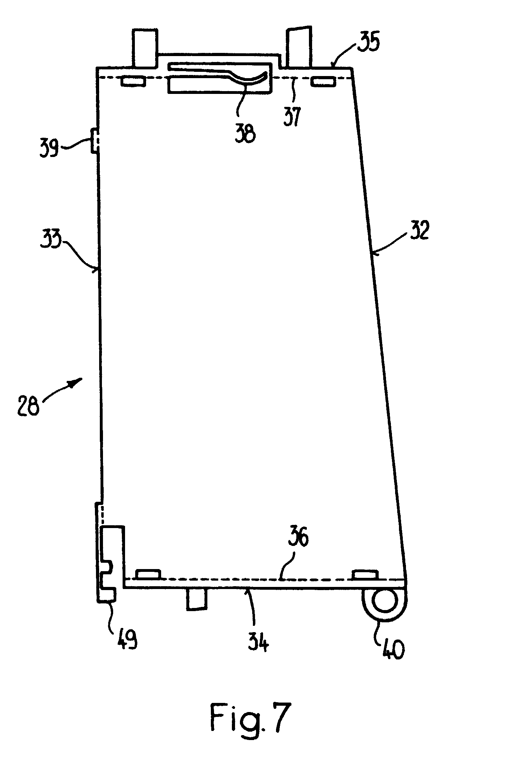

Fig. 7 zeigt eine Draufsicht auf den Führungsschlitten 28. Dieser ist im wesentlichen trapezförmig, d. h. er weist zwei parallele Schmalseiten 34, 35, eine abgeschrägte Vorderseite 32 und eine Hinterseite 33 auf. Die Hinterseite 33 bildet mit den beiden parallelen Schmalseiten 34 und 35 im wesentlichen einen rechten Winkel. Die schräge Vorderseite bildet mit der Schmalseite 24 einen spitzen und mit der Schmalseite 35 einen stumpfen Winkel.

An den Schmalseiten 34 und 35 sind z. B. einander zugewandte Führungsrillen 36 und 37 angeformt, welche die einzuführende Telefonchipkarte an deren Schmalseiten umgreifen und führen können. An der Schmalseite 35 kann ein Federelement 38 vorgesehen sein, das dafür sorgt, dass die Telefonchipkarte stets in der gleichen wohldefinierten Weise im Führungsschlitten 28 sitzt.

Ein Arretierelement 39 an der Hinterseite des Führungsschlittens 28 stoppt die lineare Einschubbewegung der Karte ab.

An der spitzwinkligen Ecke zwischen der Schmalseite 34 und der Vorderseite 32 ist ein Gelenkteil 40 angeformt. Er ist im vorliegenden Beispiel in der Art eines Ringes ausgebildet, der eine ortsfeste Drehachse des Handapparats zu umschliessen hat.

Gemäss einer bevorzugten Ausführungsform der Erfindung ist die Vorderseite 32 gerade so abgeschrägt, dass sie parallel zum Einführungsschlitz 31 des Kartenaufnahmeraums 27 steht, wenn der Führungsschlitten 28 in der Kartenaufnahmeposition ist. Die Abweichung des spitzen Winkels zwischen der Schmalseite 34 und der Vorderseite 32 von einem rechten Winkel entspricht dann gerade dem Schwenkwinkel zwischen Kartenaufnahmeposition und Kontaktposition des Führungsschlittens 28.

Damit die Chipkarte mit geringer Toleranz im Führungsschlitten 28 festgehalten werden kann, sollten beide Schmalseiten 34 und 35 und damit auch die Führungsrillen möglichst lang sein. Dies ist dann der Fall, wenn die Vorderseite 32 möglichst wenig geneigt ist. Diese Neigung bemisst sich wie oben erläutert vorzugsweise nach dem Schwenkwinkel des Führungsschlittens. Es folgt somit, dass die präzise Führung der Telefonchipkarte durch einen möglichst geringen Schwenkwinkel des Führungsschlittens begünstigt wird.

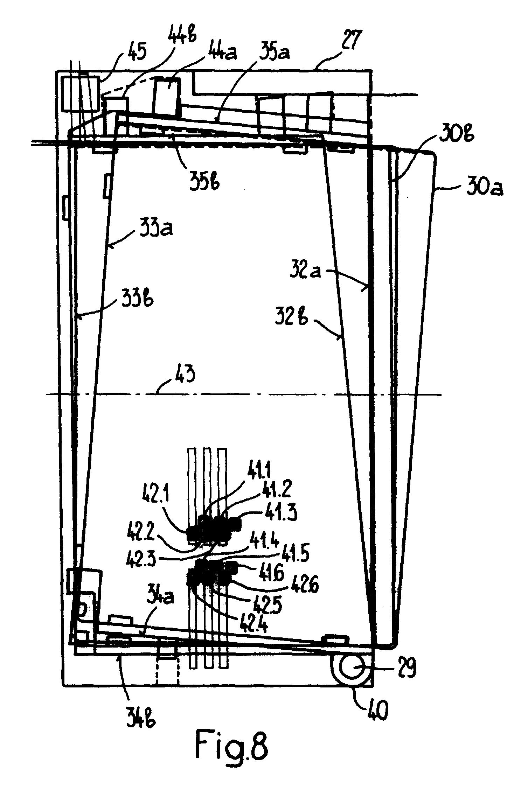

Fig. 8 veranschaulicht den oben beschriebenen Vorgang beim Einschieben der Telefonchipkarte in den Handapparat. Es sind zwei unterschiedliche Positionen des Führungsschlittens 28 mit der darin eingeführten Telefonchipkarte 30 gezeigt. Um die beiden Positionen voneinander unterscheiden zu können, sind in der Fig. die Bezugszahlen mit den Kleinbuchstaben "a" und "b" ergänzt worden. Die Endbewegung gemäss der Erfindung findet beim Uebergang von der leicht schrägen Position "a" in die gerade Position "b" statt. Der Führungsschlitten 28 dreht sich dabei um die Achse 29. Der Drehwinkel beträgt z. B. 5 bis 10°. Während in der schrägen Position die Vorderseite 32a parallel zum Einführungsschlitz ist, ist in der Kontaktposition die Hinterseite 33b parallel zum Einführungsschlitz.

In bezug auf die Länge des Einführungsschlitzes ist zu beachten, dass diese nicht viel grösser als die Länge der Telefonchipkarte zu sein braucht, da der Rotationswinkel nur sehr klein ist.

Interessant ist nun, wie die sechs standardisierten Kontaktflächen 41.1, ..., 41.6 der Telefonchipkarte auf die Kontaktelemente 42.1, ..., 42.6 hingeführt werden.

Die Kontaktelemente 42.1, ..., 42.6 sind z. B. mit an sich bekannten Kontaktfedern verwirklicht. Diese haben eine bevorzugte Belastungsrichtung. D. h. es gibt eine Richtung, in welcher sie besonders gut und problemlos auf einer Kontaktfläche verschoben werden können. Senkrecht zu dieser bevorzugten Richtung sind sie weniger stabil und viel leichter verletzlich.

Beim Drehen des Führungsschlittens gleiten nun diese Kontaktelemente über die Kartenoberfläche resp. die Kontaktflächen 41.1, ..., 41.6. Werden die an sich bekannten federnden Kontaktelemente eingesetzt, so sind sie so ausgerichtet, dass die bevorzugte Richtung im wesentlichen identisch mit der Längsrichtung des Handapparats resp. der in Kontaktposition befindlichen Telefonchipkarte ist. Beim Schliessen resp. Lösen des elektrischen Kontakts dreht sich die Telefonchipkarte auf einer wegen des grossen Abstandes der Achse 29 zu den Kontaktflächen schwach gekrümmten Bahn unter die Kontaktelemente 42.1, ..., 42.6 resp. von ihnen weg. Die Endbewegung verläuft also zumindest näherungsweise vorwiegend in Längsrichtung.

Ein weiteres wichtiges Argument zugunsten der erfindungsgemässen Endbewegung stellt der grössere Zeitraum dar, der beim Lösen der elektrischen Kontakte zur Verfügung steht. In der Regel wird die Karte erst dann herausgenommen, wenn die Kommunikation zwischen dem Handapparat und der integrierten Schaltung auf der Telefonchipkarte abgeschlossen ist (d. h. wenn das Telefongespräch beendet ist). Grundsätzlich ist es aber auch möglich, dass der Benutzer die Karte vorzeitig aus dem Kartenaufnahmeraum herausnimmt. Auch in diesem sehr ungünstigen Fall muss gewährleistet sein, dass der Chip auf der Karte nicht in einem undefinierten Zustand zurückgelassen werden kann.

Eine Möglichkeit, diesen Sicherheitsanforderungen zu entsprechen, besteht darin, dass ein Kontaktschalter ein Herausnehmen der Telefonchipkarte unverzüglich detektiert und dass der Kommunikationsprozessor unverzüglich einen definierten Schlussstatus des Kartenchips herbeiführt. Dies kann aufgrund der hohen Taktrate heutiger integrierter Prozessoren grundsätzlich innerhalb von Millisekunden erreicht werden. Allerdings ist damit zu rechnen, dass vom Beginn der unerwünschten Kartenbewegung bis zum Abschluss der Datenkommunikation eine gewisse minimale Zeit verstreicht. Diese Verzögerungszeit wird aufgrund der erfindungsgemässen Anordnung wie folgt erzeugt.

Die Kontaktelemente 42.1, ..., 42.6 schleifen (aufgrund ihrer federnden Lagerung) in der Endbewegungsphase über die Kartenoberfläche und insbesondere über die Kontaktflächen 41.1, ..., 41.6. Gemäss der gegenwärtig üblichsten Norm haben die Kontaktflächen 41.1, ..., 41.6 je eine rechteckige Form mit einer Kantenlänge von 2.0 x 1.6 Millimetern. Wenn sich die Telefonchipkarte in der Kontaktposition "b" befindet, dann sind die Längsseiten parallel zum Einführungsschlitz.

Wie bereits mehrfach erwähnt, verläuft die Bewegung in der Endphase (beim Einführen) resp. der Anfangsphase (beim Herausdrehen) näherungsweise tangential zur Längsrichtung der Kontaktflächen 41.1, ..., 41.6 resp. senkrecht zu einer Querachse 43 des Handapparats. Auch wenn die Telefonchipkarte aus ihrer Kontaktposition herausgedreht wird, bleibt der elektrische Kontakt zwischen den Kontaktflächen 41.1, ..., 41.6 und den Kontaktelementen 42.1, ..., 42.6 noch über eine gewisse Strecke hinweg bestehen. Die Zeit, die nun zum Durchlaufen dieser Strecke benötigt wird, bestimmt die zur Verfügung stehende Verzögerungszeit.

Es leuchtet ein, dass bei einem reinen längsseitigen Einschub (vollständig lineare Bewegung senkrecht zur Längsseite der Telefonchipkarte) die nutzbare Verzögerungszeit kleiner ist, weil die genormten Kontaktflächen nur etwa 1.6 Millimeter breit sind. Zudem sind die Kontaktflächen seitlich viel näher beabstandet als in Längsrichtung. Der seitliche Raster beträgt nämlich etwa 2.54 Millimeter. In Längsrichtung ist dagegen allein schon die Distanz ein Mehrfaches der Länge einer einzigen Kontaktfläche.

Aufgrund des oben Gesagten leuchtet es ein, dass der Drehwinkel nur gerade so gross zu sein braucht, dass die Kontaktflächen 41.1, ..., 41.6 alle vollständig von den Kontaktelementen 42.1, ..., 42.6 lateral getrennt sind. Wie gross der Winkel im Einzelfall zu sein braucht, hängt davon ab, wo die Drehachse angeordnet ist. Vorteilhaft ist einerseits ein grosser Abstand von den Kontaktelementen 42.1, ..., 42.6 (was einen grossen Drehradius ergibt) und andererseits eine Anordnung möglichst "auf gleicher Höhe" wie die Kontaktelemente, damit die Endbewegung möglichst gut einer Längsbewegung im oben erläuterten Sinn entspricht.

Anhand von Fig. 9 soll gezeigt werden, was unter dem Begriff "auf gleicher Höhe" zu verstehen ist. Fig. 9 zeigt schematisch zwei Kontaktflächen 41.1 und 41.2 und zwei Kontaktelemente 42.1 und 42.2. Dem Kontaktelement 42.1 kann eine Längsachse 47 und eine Querachse 48 zugeordnet werden. Wenn nun der Führungsschlitten so ausgebildet ist, dass er sich um eine Rotationsachse 46 bewegt, die auf oder zumindest in der Nähe der Querachse 48 liegt, dann verläuft die Endbewegung der Kontaktfläche 41.1 weitgehend tangential zur Längsachse 47. Je grösser der Rotationsradius R ist, desto schwächer ist die Bewegungskurve gekrümmt.

Die in der Fig. 8 gezeigte und an sich bestens bekannte und auch genormte Anordnung der Kontaktflächen 41.1, ..., 41.6 umfasst im Prinzip zwei Dreiergruppen von auf einer gemeinsamen Querachse angeordneten Kontaktflächen 41.1, 41.2, 41.3 resp. 41.4, 41.5, 41.6.

Der Begriff "auf gleicher Höhe" ist nun so zu verstehen, dass die Rotationsachse zwischen den beiden gemeinsamen Querachsen oder in unmittelbarer Nähe davon angeordnet ist. Vorteilhaft ist es deshalb, wenn die Rotationsachse am Rand der Vorderseite des Führungsschlittens in der Umgebung der genannten Querachsen angeordnet ist. Die geometrische Verlängerung der Rotationsachse durchstösst also die geometrische Ebene der im Führungsschlitten sitzenden Telefonchipkarte in der Nähe ihres Randes, insbesondere einer ihrer Längsseiten.

Gemäss einer bevorzugten Ausführungsform der Erfindung wird der Führungsschlitten in seiner zur Aufnahme der Telefonchipkarte bereiten Position so lange blockiert, bis die Karte vollständig in den Führungsschlitten eingeschoben ist und infolgedessen einen Kontakthebel 49 (vgl. Fig. 7) betätigt. Danach wird die Deblockierung der Drehbewegung eingeleitet. Sobald die Kontaktflächen 41.1, ..., 41.6 der Chipkarte mit den Kontaktelementen 42.1, ..., 42.6 elektrisch Kontakt machen können, kann die Kommunikation zwischen der Telefonchipkarte und dem Handapparat beginnen. Das Vorliegen eines ausreichenden Kontakts kann durch einen Näherungsschalter 45 ermittelt werden, der die Annäherung eines Referenzelementes 44 des Führungsschlittens detektiert (Uebergang von der Position 44a auf die Position 44b).

Die erfindungsgemässe Idee, einen längsseitigen Einschub mit einer vorzugsweise rotierenden Endbewegung zu kombinieren, kann auch anders als in den Figuren gezeigt realisiert werden. Insbesondere die konstruktiven Einzelheiten sind nicht beschränkend auszulegen.

Beispielsweise kann die rotative Bewegung resp. Lagerung durch irgendwelche scharnierartig zusammenwirkende Gelenkteile verwirklicht werden. Es kann aber auch eine geeignete Kulisse, in welcher der Führungsschlitten gleitet, im Kartenaufnahmeraum ausgebildet sein.

In Fig. 8 wird die Drehung um eine zwar unmittelbar am Rand der eingefügten Telefonchipkarte, aber "ausserhalb derselben liegenden" Achse durchgeführt. Selbstverständlich ist es auch möglich, oder unter Umständen sogar sinnvoll, die Rotationsachse "innerhalb der Karte" anzuordnen.

Es darf natürlich nicht vergessen werden, dass das Grundprinzip der Erfindung (längsseitiger Einschub) auch mit einer rein translatorischen Bewegung d. h. ohne gekrümmte Endbewegung verwirklicht werden kann.

Schliesslich ist es auch denkbar, den Führungsschlitten wegzulassen und die Karte unmittelbar in einer Kulisse gleiten zu lassen.

## Patentansprüche

1. Handapparat (1) für ein mit einer Telefonkarte (2) betreibbares Auto- oder Funktelefon, mit einer mit Tastatur (6) und Anzeigefeld (7) versehenen Gehäuseoberseite (5), einer mit Hör- (9) sowie Sprechmuschel (10) versehenen Gehäuseunterseite (8), zwei Gehäuselängsseiten (12, 13), einem in einen Kartenaufnahmeraum (16) mündenden Einführungsschlitz (15) für die Telefonkarte (2) und einer Lesevorrichtung (17) zum Lesen der Karte (2), dadurch gekennzeichnet, dass der Einführungsschlitz (15) an einer der Gehäuselängsseiten (12, 13) in Richtung der Längserstreckung des Handapparats angeordnet und zwecks längsseitigem Einführen der Telefonkarte (2) mindestens entsprechend deren Länge bemessen ist.

2. Handapparat (1) nach Anspruch 1, dadurch gekennzeichnet, dass sich der Kartenaufnahmeraum (16) wenigstens annähernd bis zur dem Einführungsschlitz (15) gegenüberliegenden Gehäuselängsseite (13) erstreckt, so dass die Telefonkarte (2) vollständig oder nahezu vollständig in den Handapparat (1) einführbar ist, um das Ergreifen und Halten des Handapparats (1) nicht zu behindern.

3. Handapparat (1) nach Anspruch 1 oder 2, dadurch gekennzeichnet, dass zumindest ein Teil, vorzugsweise der grössere Teil des Kartenaufnahmeraums (16) im sich von der Hör- zur Sprechmuschel (9, 10) erstreckenden Griffteil (11) angeordnet ist.

4. Handapparat (1) nach einem der Ansprüche 1 bis 3, dadurch gekennzeichnet, dass sich der Kartenaufnahmeraum (16) von der Hörmuschel (9) in den Griffteil (11) erstreckt.

5. Handapparat (1) nach Anspruch 3 oder 4, dadurch gekennzeichnet, dass der Kartenaufnahmeraum (16) im Bereich des sich von der Hör- zur Sprechmuschel (9, 10) erstreckenden Griffteils (11) unmittelbar an die Wandung (18) der Gehäuseunterseite (8) angrenzt.

6. Handapparat (1) nach Anspruch 5, dadurch gekennzeichnet, dass an der Gehäuseunterseite (8) eine in den Kartenaufnahmeraum (16) mündende, mindestens fingerbreite Aussparung (19,21) zum Herausschieben der Telefonkarte (2) aus dem Aufnahmeraum (16) vorgesehen ist.

7. Handapparat (1) nach Anspruch 6, dadurch gekennzeichnet, dass die Aussparung (19) nach Art eines Langlochs ausgeführt ist, das quer zur Handapparatlängsrichtung verläuft und in der Breite zum Durchgreifen eines Fingers bemessen ist.

8. Handapparat (1) nach Anspruch 6 oder 7, dadurch gekennzeichnet, dass die Aussparung (21) am an den Karteneinführungsschlitz (15) angrenzenden Längsrandbereich der Gehäuseunterseite (8) vorgesehen ist oder sich bis dorthin erstreckt, so dass in einem Bewegungsablauf zunächst mit durch die Aussparung (21) greifendem Zeigefinger auf der in der Aussparung (21) zugänglichen Kartenoberfläche angegriffen und die Karte (2) damit soweit aus dem Einführungsschlitz (15) herausgeschoben werden kann, dass anschliessend mit dem Daumen auf die andere Kartenoberfläche gefasst und die Karte (2) gänzlich herausgezogen werden kann.

9. Handapparat (1) nach den Ansprüchen 2 und 6, dadurch gekennzeichnet, dass die Aussparung (21) am dem Karteneinführungsschlitz (15) gegenüberliegenden Längsrandbereich (13) der Gehäuseunterseite (8) vorgesehen ist oder sich bis dorthin erstreckt, so dass mit durch die Aussparung (21) greifendem Finger am dem Karteneinführungsschlitz (15) gegenüberliegenden Kartenlängsrand angegriffen und die Karte (2) soweit aus dem Gehäuse (1) herausgestossen werden kann, dass ein zum Ergreifen ausreichender Kartenteil aus dem Karteneinführungsschlitz (15) herausragt.

10. Handapparat (1) nach einem der Ansprüche 1 bis 9, dadurch gekennzeichnet, dass der Kartenaufnahmeraum (16) an beiden Gehäuselängsseiten (12, 13) offen ist, so dass die Karte (2) wahlweise an jeder der beiden Gehäuseseiten (12, 13) einführbar und herausziehbar ist.

11. Handapparat (1) nach einem der Ansprüche 1 bis 10, dadurch gekennzeichnet, dass die Kartenlesevorrichtung (17) so ausgebildet und angeordnet ist, dass die Karte (2) sowohl in der Gebrauchslage als auch in der umgedrehten Lage lesbar ist.

12. Handapparat (1) nach Anspruch 11, dadurch gekennzeichnet, dass die Kartenlesevorrichtung (17) zum Lesen einer kontaktlosen Telefonchipkarte (2) ausgebildet ist.

13. Handapparat (1) nach Anspruch 11, dadurch gekennzeichnet, dass die Kartenlesevorrichtung (17) zwei oberhalb und unterhalb des Kartenaufnahmeraums (2) angeordnete Leseeinrichtungen hat.

14. Handapparat (24) nach einem der Ansprüche 1 bis 13, dadurch gekennzeichnet, dass im Kartenaufnahmeraum (27) ein Führungsschlitten (28) zur Aufnahme einer Telefonchipkarte (30) vorgesehen ist, der derart verschiebbar gelagert ist, dass er beim Einbringen der Telefonchipkarte (30) zumindest streckenweise eine in der geometrischen Ebene der Telefonchipkarte gekrümmte Bewegungskurve ausführt, wobei die in eine Kontaktlage führende Endbewegung zumindest näherungsweise eine Längsbewegung bezüglich der rechteckigen Kontaktflächen (41.1, ..., 41.6) der Telefonchipkarte (30) ist.

15. Handapparat (24) nach Anspruch 14, dadurch gekennzeichnet, dass der Führungsschlitten (28) um eine Achse (29) drehbar gelagert ist.

16. Handapparat (24) nach Anspruch 15, dadurch gekennzeichnet, dass die Achse (29) so angeordnet ist, dass bei im Führungsschlitten (28) eingefügter Telefonchipkarte (30) ein Durchstosspunkt einer geometrischen Verlängerung der genannten Achse (29) durch die geometrische Ebene der eingeführten Telefonchipkarte (30) in der Nähe des Randes der Telefonchipkarte (30) liegt.

17. Handapparat (24) nach Anspruch 16, dadurch gekennzeichnet, dass der genannte Durchstosspunkt in der Nähe einer Ecke der eingeführten Telefonchipkarte (30) liegt.

18. Handapparat (24) nach einem der Ansprüche 14 bis 17, dadurch gekennzeichnet, dass der zur Aufnahme der Telefonchipkarte (30a) bereite Führungsschlitten (28) so ausgerichtet ist, dass die Telefonchipkarte (30a) zunächst schräg zur Gehäuselängsseite einzuschieben und danach zu drehen ist.

19. Handapparat (24) nach Anspruch 18, dadurch gekennzeichnet, dass der Führungsschlitten (28) in seinen beiden Endpositionen arretierbar ist und dass ein Kontaktschalter (49) vorgesehen ist, der die Deblockierung erst dann einleitet, wenn die Telefonchipkarte (30a) vollständig im Führungsschlitten (28) sitzt.

20. Handapparat (24) nach einem der Ansprüche 15 bis 18, dadurch gekennzeichnet, dass der Führungsschlitten (28) so ausgebildet ist, dass er die Telefonchipkarte (30) am Rand möglichst weitgehend umfassen kann, ohne aber in irgendeiner Weise aus dem Einführungsschlitz (31) herauszuragen.

## Claims

1. A handset (1) for a car or mobile telephone which can be operated with a telephone card (2), having a housing top-face (5) provided with a keypad (6) and display field (7), a bottom housing face (8) provided with earpiece (9) and mouthpiece (10), two housing longitudinal-sides (12, 13), an insertion slot (15) for the telephone card (2) opening into a card-receiving compartment (16) and a reading device (17) for reading the card (2), characterised in that the insertion slot (15) is arranged on one of the longitudinal sides (12, 13) of the housing in the direction of the longitudinal extension of the handset and, to enable the telephone card (2) to be inserted lengthways, corresponds in size to at least the length thereof.

2. A handset (1) as claimed in claim 1, characterised in that the card-receiving compartment (16) extends at least almost as far as the longitudinal side (13) of the housing lying opposite the insertion slot (15) so that the telephone card (2) can be inserted completely or almost completely in the handset (1) so that it will not present an obstacle to lifting and holding the handset (1).

3. A handset (1) as claimed in claim 1 or 2, characterised in that at least a part, preferably the greater part, of the card-receiving compartment (16) is arranged in the handgrip part (11) extending from the earpiece to the mouthpiece (9, 10).

4. A handset (1) as claimed in one of claims 1 to 3, characterised in that the card-receiving compartment (16) extends from the earpiece (9) into the handgrip part (11).

5. A handset (1) as claimed in claim 3 or 4, characterised in that in the region of the handgrip part (11) extending from the earpiece to the mouthpiece (9, 10) the card-receiving compartment (16) directly borders on the wall (18) of the bottom face (8) of the housing.

6. A handset (1) as claimed in claim 5, characterised in that a recess (19, 21) of at least a finger's width and opening into the card-receiving compartment (16) is provided on the bottom face (8) of the housing for sliding the telephone card (2) out from the card-receiving compartment (16).

7. A handset (1) as claimed in claim 6, characterised in that the recess (19) is designed as a longitudinal hole running transversely to the longitudinal direction of the handset and is of a width such that a finger can be inserted therethrough.

8. A handset (1) as claimed in claim 6 or 7, characterised in that the recess (21) is provided at the longitudinal edge region of the bottom face (8) of the housing adjacent to the card insertion slit (15) or extends thereto so that, in order to remove it, the accessible face of the card can firstly be gripped by putting the index finger on the card face accessible through the recess (21) and moving the card (2) far enough out from the insertion slot (15) for the thumb to be able to grip the other card-face so that the card (2) can be completely removed.

9. A handset (1) as claimed in claims 2 and 6, characterised in that the recess (21) is provided on the longitudinal edge region (13) of the bottom face (8) of the housing lying opposite to the card-insertion slot (15) or extends thereto so that the longitudinal edge of the card lying opposite to the card-insertion slot (15) can be gripped by the finger and the card (2) pushed far enough out from the housing (1) so that a part of the card which is sufficient to take hold of projects out from the card insertion slot (15).

10. A handset (1) as claimed in one of claims 1 to 9, characterised in that the card-receiving compartment (16) is open at both longitudinal sides (12, 13) of the housing so that the card (2) can optionally be inserted and removed from either of the two housing sides (12, 13).

11. A handset (1) as claimed in one of claims 1 to 10, characterised in that the card-reading device (17) is designed and arranged so that the card (2) can be read both in the operational position and in the reversed position.

12. A handset (1) as claimed in claim 11, characterised in that the card-reading device (17) is designed so that it can read a contactless telephone chip card (2).

13. A handset (1) as claimed in claim 11, charcterised in that the card-reading device (17) has two reading devices arranged above and below the card-receiving compartment (2).

14. A handset (24) as claimed in one of claims 1 to 13, characterised in that a guide carriage (28) for receiving a telephone chip card (30) is provided in the card-receiving compartment (27), mounted so as to be able to slide in such a way that, when the telephone chip card (30) is inserted, it travels at least across a certain course through a curved arc of movement in the geometric plane of the telephone chip card, whereby the final movement leading to a contact position is at least almost a longitudinal movement in relation to the rectangular contact faces (41.1, ..., 41.6) of the telephone chip card (30).

15. A handset (24) as claimed in claim 14, characterised in that the guide carriage (28) is mounted so that it can rotate about a pin (29).

16. A handset (24) as claimed in claim 15, characterised in that the pin (29) is arranged so that when the telephone chip card (30) is inserted in the guide carriage (28), a point of intersection of a geometric extension of said pin (29) through the geometric plane of the inserted telephone chip card (30) lies in the vicinity of the edge of the telephone chip card (30).

17. A handset (24) as claimed in claim 16, characterised in that said intersection point lies in the vicinity of a corner of the inserted telephone chip card (30).

18. A handset (24) as claimed in one of claims 14 to 17, characterised in that when waiting to receive the telephone chip card (30a), the guide carriage (28) is oriented so that the telephone chip card (30a) must firstly be pushed in at an angle to the longitudinal side of the housing and then turned.

19. A handset (24) as claimed in claim 18, characterised in that the guide carriage (28) can be halted in its two end positions and a contact switch (49) is provided which does not initiate a releasing action until the telephone chip card (30a) is correctly seated in the guide carriage (28).

20. A handset (24) as claimed in one of claims 15 to 18, characterised in that the guide carriage (28) is designed so that it surrounds the edge of the telephone chip card (30) as far as possible but without protruding out from the insertion-slit (31) in any way.

## Revendications

1. Combiné téléphonique (1) pour un téléphone de voiture ou un radiotéléphone pouvant fonctionner avec une carte téléphonique (2), comportant une face supérieure de boîtier (5) pourvue d'un clavier (6) et d'un panneau d'affichage (7),une face inférieure de boîtier (8) pourvue d'un écouteur (9) et d'un haut-parleur (10), deux côtés longitudinaux de boîtier (12,13), une fente d'introduction (15) pour la carte téléphonique (2), qui débouche dans l'espace (16) de logement de la carte, et un dispositif de lecture (17) pour lire la carte (2), caractérisé en ce que la fente d'introduction (15) est disposée sur l'un des côtés longitudinaux (12,13) du boîtier dans la direction longitudinale du combiné et est dimensionnée de manière à avoir une longueur correspondant au moins à la longueur de la carte téléphonique (2), pour l'introduction de cette dernière sur le côté longitudinal.

2. Combiné (1) selon la revendication 1, caractérisé en ce que l'espace (16) de réception de la carte s'étend au moins approximativement jusqu'au côté longitudinal (13) du boîtier, qui est situé à l'opposé de la fente d'introduction (15) de sorte que la carte téléphonique (2) peut être introduite complètement ou presque complètement dans le combiné (1), pour ne pas gêner la saisie et le maintien du combiné (1).

3. Combiné (1) selon la revendication 1, caractérisé en ce qu'au moins une partie, de préférence la majeure partie de l'espace (16) de logement de la carte, est disposée dans l'organe de préhension (11) qui s'étend depuis l'écouteur jusqu'au haut-parleur (9,10).

4. Combiné (1) selon l'une des revendications 1 à 3, caractérisé en ce que l'espace (16) de logement de la carte s'étend à partir de l'écouteur (9) dans l'organe de préhension (11).

5. Combiné (1) selon la revendication 3 ou 4, caractérisé en ce qu'au niveau de l'organe de préhension (11) qui s'étend de l'écouteur jusqu'au haut-parleur (9, 10), l'espace (16) de logement de la carte jouxte directement la paroi (18) de la face inférieure (8) du boîtier.

6. Combiné (1) selon la revendication 5, caractérisé en ce que sur la face inférieure (8) du boîtier est prévu un évidement (19,21) qui débouche dans l'espace (16) de logement de la carte, possède au moins la largeur d'un doigt et sert à retirer la carte téléphonique (2) de l'espace de logement (16).

7. Combiné (1) selon la revendication 6, caractérisé en ce que l'évidement (19) est agencé à la manière d'un trou allongé, qui s'étend transversalement par rapport à la direction longitudinale du combiné et a une largeur dimensionnée de manière à permettre le passage d'un doigt.

8. Combiné (1) selon la revendication 6 ou 7, caractérisé en ce que l'évidement (21) est prévu dans la zone du bord longitudinal, qui jouxte la fente (15) d'introduction de la carte, de la partie inférieure (8) du boîtier ou s'étend jusqu'en cet endroit, de sorte que la surface de la carte, qui est accessible dans l'évidement (21), est atteinte au moins par l'index, qui s'engage dans l'évidement (22), lors d'un cycle de déplacement et que de ce fait la carte (2) peut être retirée de la fente d'introduction (15) au point qu'ensuite on peut saisir avec le pouce l'autre surface de la carte et retirer complètement la carte (2).

9. Combiné (1) selon les revendications 2 et 6, caractérisé en ce que l'évidement (21) est prévu sur la partie de bord longitudinal (13), située à l'opposé de la fente (15) de guidage de la fente (15), de la partie inférieure (8) du boîtier ou s'étend jusqu'en cet endroit de sorte que l'on peut appliquer l'index, qui s'engage dans l'évidement (21), sur le bord longitudinal de la carte située à l'opposé de la fente (15) d'introduction de la carte et que l'on fait ressortir la carte (2) du boîtier (1) au point qu'une partie de la carte, suffisante pour qu'on puisse la saisir, ressort de la fente (15) d'introduction de la carte.

10. Combiné (1) selon l'une des revendications 1 à 9, caractérisé en ce que l'espace (16) de logement de la carte est ouvert sur deux côtés longitudinaux (12,13) du boîtier de sorte que la carte (2) peut être introduite et retirée au choix au niveau de chacun des deux côtés (12,13) du boîtier.

11. Combiné (1) selon l'une des revendications 1 à 10, caractérisé en ce que le dispositif de lecture de la carte (17) est agencé et disposé de telle sorte que la carte (2) peut être lue aussi bien dans la position d'utilisation que dans la position pivotée.

12. Combiné (1) selon la revendication 11, caractérisé en ce que le dispositif (17) de lecture de la carte est agencé pour lire une carte à puce téléphonique (2) sans contacts.

13. Combiné (1) selon la revendication 11, caractérisé en ce que le dispositif (17) de lecture de la carte comporte deux dispositifs de lecture disposés au-dessus et au-dessous de l'espace (2) de logement de la carte.

14. Combiné (24) selon l'une des revendications 1 à 13, caractérisé en ce que dans l'espace (27) de logement de la carte est prévu un coulisseau de guidage (28) servant à recevoir une carte à puce téléphonique (30) et qui est monté de manière à être déplaçable de telle sorte que lors de l'introduction de la carte à puce téléphonique (30), il se déplace au moins par endroits suivant une courbe de déplacement coudée dans le plan géométrique de la carte à puce téléphonique, le déplacement final, qui aboutit à une position de contact, étant au moins approximativement un déplacement longitudinal par rapport aux surfaces perpendiculaires de contact (41.1, ..., 41.6) de la carte à puce téléphonique (30).

15. Combiné (24) selon la revendication 14, caractérisé en ce que le coulisseau de guidage (28) est monté de manière à pouvoir tourner autour d'un axe (29).

16. Combiné (24) selon la revendication 15, caractérisé en ce que l'axe (29) est disposé de telle sorte que, dans le cas où la carte à puce téléphonique (30) est insérée dans le coulisseau de guidage (28), un point d'intersection d'un prolongement géométrique dudit axe (22) avec le plan géométrique de la carte à puce téléphonique (30) introduite est situé à proximité du bord de la carte à puce téléphonique (30).

17. Combiné (24) selon la revendication 16, caractérisé en ce que ledit point d'intersection est situé à proximité d'un coin de la carte à puce téléphonique (30) introduite.

18. Combiné (24) selon l'une des revendications 14 à 17, caractérisé en ce que le coulisseau de guidage (28), prêt à recevoir la carte à puce téléphonique (30a) est conçu de telle sorte qu'il faut introduire la carte à puce téléphonique (30a) tout d'abord obliquement par rapport au côté longitudinal du boîtier et ensuite la faire pivoter.

19. Combiné (24) selon la revendication 18, caractérisé en ce que le coulisseau de guidage (28) peut être bloqué dans ses deux positions d'extrémité et qu'il est prévu un interrupteur de contact (49), qui déclenche le déblocage uniquement lorsque la carte à puce téléphonique (30a) est située complètement dans le coulisseau de guidage (28).

20. Combiné (24) selon l'une des revendications 15 à 18, caractérisé en ce que le coulisseau de guidage (28) est agencé de telle sorte qu'il peut entourer d'une manière aussi étendue que cela est possible la carte à puce téléphonique (30) sur son bord, sans cependant ressortir d'une quelconque manière hors de la fente d'introduction (31).
